# EUROPÄISCHE PATENTSCHRIFT

(11) **EP 0 671 966 B1**
(45) Veröffentlichungstag und Bekanntmachung des Hinweises auf die Patenterteilung: **07.10.1998**
(21) Anmeldenummer: 94926057.4
(22) Anmeldetag: 16.09.1994
(51) Int. Cl.: B01D 17/025, B01D 17/032

(54) **LEICHTFLÜSSIGKEITSABZUGVORRICHTUNG ZUM EINBAU IN EIN ABSCHEIDEBECKEN**
LIGHT-LIQUID OFFTAKE SYSTEM FOR A SEPARATOR BASIN
DISPOSITIF D'EXTRACTION DE LIQUIDES LEGERS POUR BAC DE SEPARATION

(30) Priorität: 05.10.1993 AT 1995/93
(43) Veröffentlichungstag der Anmeldung: 20.09.1995
(73) Patentinhaber: Ortner, Heinrich, 9900 Lienz (AT)
(72) Erfinder: Ortner, Heinrich, 9900 Lienz (AT)
(74) Vertreter: Hofinger, Engelbert, DDr.
(86) Internationale Anmeldenummer: AT9400133
(87) Internationale Veröffentlichungsnummer: WO9509684

(56) Entgegenhaltungen:
- EP-A- 0 368 084
- AT-B- 394 846
- DE-A- 2 838 559
- DE-A- 2 951 205
- DE-A- 4 110 091

## Beschreibung

Die Erfindung betrifft eine Abzugvorrichtung zum Einbau in ein Abscheidebecken eines Leichtflüssigkeitsabscheiders, mit einem Trennbehälter, dessen oberer Bereich eine Zulauföffnung für das zu reinigende Flüssigkeits-Gemisch, eine Überlauföffnung für Leichtflüssigkeit in einem nachgeordneten Sammelbehälter und eine Überlauföffnung für Wasser aufweist.

Eine derartige, in einen Leichtflüssigkeitsabscheider einbaubare Ölabzugvorrichtung ist beispielsweise der AT-B 394 846 zu entnehmen. Die Unterkante der Wasserüberlauföffnung liegt dort tiefer als die Unterkante der Ölüberlauföffnung, wobei die Wasserüberlauföffnung durch eine bis knapp über den Boden des Trennbehälters reichende Tauchwand vom restlichen Behälter abgeschirmt ist. Somit kann durch die Wasserüberlauföffnung nur Wasser austreten und wasserfreies Öl tritt durch die Ölüberlauföffnung aus, sobald die Ölschicht die dem Niveauunterschied der beiden Öffnungsunterkanten entsprechende Dicke erreicht hat. Das wasserfreie Öl fließt in einen Sammelbehälter und das ölfreie Wasser fließt in den Abscheider, aus dem es in üblicher Weise in den Kanal od.dgl. gelangt. Ein gestörter Abfluß bringt ein Ansteigen des Flüssigkeitsniveaus in der Abzugsvorrichtung mit sich, was zu einer Überflutung und Wiedervermischung der Leichtflüssigkeit mit dem Wasser führen kann.

Schwimmerbetätigte Zuflußsperren in den Abscheider selbst sind aus der EP-A 368 084, der DE-A 41 10 091 und der AT-B 393 670 bekannt. In diesen wird jedoch die Mündung des Zuflußrohres in den Abscheideraum durch eine schwimmerbetätigte Klappe verschlossen, wobei der Schwimmer gemäß der EP-A 368 084 in einem dem Abscheideraum nachgeordneten Leichtflüssigkeitsspeicher, und gemäß der DE-A 41 10 091 und der AT-B 393 670 im Abscheideraum selbst angeordnet ist.

Die Erfindung hat es sich nun zur Aufgabe gestellt, Fehlfunktionen der eingangs genannten Abzugvorrichtung bei gestörtem Leichtflüssigkeitsabfluß und/oder Wasserabfluß zu vermeiden und schlägt hiezu vor, daß an der Zulauföffnung in den Trennbehälter eine Verschlußvorrichtung vorgesehen ist, daß der Überlauföffnung für Wasser ein zweiter Sammelbehälter nachgeordnet ist, und daß in jedem der beiden Sammelbehälter ein Schwimmer angeordnet ist, von dem die Verschlußvorrichtung betätigbar ist.

Die Sperre des Zuflusses erfolgt dadurch somit in Abhängigkeit von den Flüssigkeitsständen in den Sammelbehältern, sodaß die Flüssigkeit im Trennbehälter nicht durch den Schwimmer beeinflußt wird.

Eine erste bevorzugte Ausführung sieht dabei vor, daß zwischen jedem Schwimmer und der Verschlußvorrichtung ein Betätigungsgestänge vorgesehen ist.

Eine weitere bevorzugte Ausführung sieht vor, daß das Betätigungsgestänge des Schwimmers im Wassersammelbehälter die Verschlußvorrichtung betätigt und das Betätigungsgestänge des Schwimmers im Leichtflüssigkeitssammelbehälter am Betätigungsgestänge des Schwimmers im Wassersammelbehälter angreift. Trotz der wahlweisen Betätigung über den jeweils ansteigenden Schwimmer ist so nur eine einfache, eine einzige Betätigungsmöglichkeit aufweisende Verschlußvorrichtung für die Zulauföffnung einsetzbar.

Wenn der Sammelbehälter für Wasser einen Ablauf in den Abscheider aufweist, so wird ein Rückstau durch den Ablauf in einer weiteren bevorzugten Ausführung dadurch verhindert, daß dem Ablauf des Wassersammelbehälters als Wasserrückflußsperre eine zweite durch den Schwimmer betätigte Verschlußvorrichtung zugeordnet ist.

Der Wassersammelbehälter ist bevorzugt durch einen Zwischenboden in zwei Kammern unterteilt, in denen ein Durchlaß vorgesehen ist. Die untere Kammer enthält in dieser Ausführung den Schwimmer und weist an der Oberseite als Rückflußsperre in die obere Kammer und damit in den Trennbehälter ein Absperrelement der zweiten Verschlußvorrichtung auf, das beim Ansteigen des Schwimmers den Durchlaß gleichzeitig mit dem Zulauf verschließt.

Nachstehend wird nun die Erfindung anhand der Figuren der beiliegenden Zeichnung näher beschrieben, ohne darauf beschränkt zu sein.

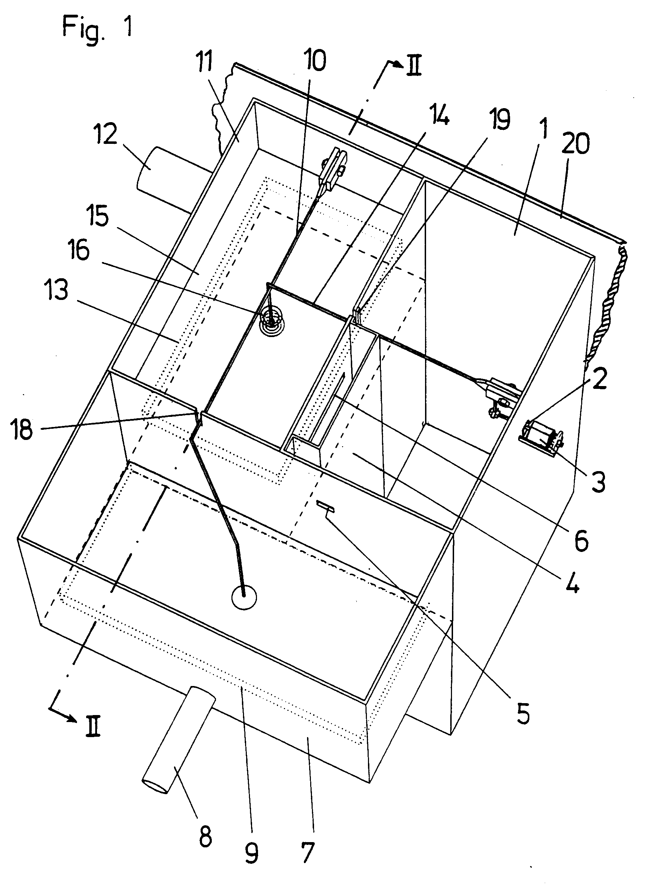

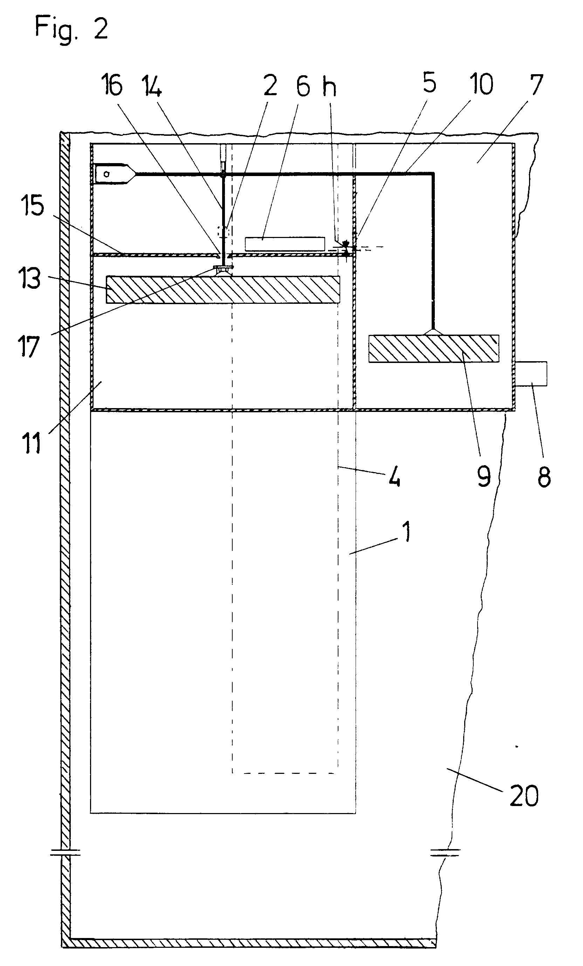

Die Fig. 1 zeigt eine Schrägdraufsicht auf eine erfindungsgemäße Abzugvorrichtung und die Fig. 2 einen Vertikalschnitt nach den Linien II-II von Fig. 1.

Eine in ein Abscheidebecken 20 eines Leichtflüssigkeitsabscheiders einsetzbare Abzugvorrichtung weist einen Trennbehälter 1 auf, an dem eine Zulauföffnung 2, eine Leichtflüssigkeitsüberlauföffnung 5 und eine Wasserüberlauföffnung 6 vorgesehen sind. Ein die Wasserüberlauföffnung 6 enthaltender Teilraum des Trennbehälters 1 ist vom restlichen Raum durch eine Tauchwand 4 abgeteilt, die bis nahe an den Boden des Trennbehälters 1 ragt. Dadurch gelangt in den Teilraum nur Wasser, da die leichtere, an der Oberflache sich sammelnde Leichtflüssigkeit, insbesondere Öl, nicht unter der Tauchwand 4 hindurchtreten kann. Wie vor allem aus Fig. 2 ersichtlich, liegt die Unterkante der Wasserüberlauföffnung 6 um die Höhe h tiefer als die Unterkante der Leichtflüssigkeitsüberlauföffnung 5, sodaß Wasser nicht durch die Leichtflüssigkeitsüberlauföffnung 5 übertreten kann. Die sich auf der Wasseroberfläche einstellende Leichtflüssigkeitsschicht weist somit die Dicke h auf. An den Trennbehälter 1 sind ein Leichtflüssigkeitssammelbehälter 7 und ein Wassersammelbehälter 11 angesetzt, die jeweils einen Ablauf 8,12 und einen Schwimmer 9,13 aufweisen. Der Schwimmer 9 des Leichtflüssigkeitssammelbehälters 7 weist ein sich nach oben und anschließend horizontal durch einen Schlitz 18 in der Zwischenwand zum Wassersammelbehälter 11 erstreckendes Gestänge 10 auf, das an einer gegenüberliegenden Wand des Wassersammelbehälters 11 (oder des Trennbehälters 1) angelenkt ist. Der Schwimmer 13 des Wassersammelbehälters 11 weist ebenfalls ein sich nach oben und anschließend horizontal durch einen Schlitz 19 in der Zwischenwand zum Trennbehälter 1 erstreckendes Gestänge 14 auf, das an der die Zulauföffnung 2 aufweisenden Wand des Trennbehälters 1 angelenkt ist und über einen Lenker eine der Zulauföffnung 2 außenseitig zugeordnete Verschlußvorrichtung 3 betätigt. Der horizontale Abschnitt des Gestänges 10 liegt dabei unterhalb des horizontalen Abschnittes des Gestänges 14. Steigt nun im Leichtflüssigkeitssammelbehälter 7 der Spiegel über ein vorgegebenes Niveau, so hebt der Schwimmer 9 über das Gestänge 10 das Gestänge 14 an, das die Verschlußvorrichtung 3 von außen an die Zulauföffnung 2 anpreßt und diese dadurch verschließt. Steigt im Wassersammelbehälter 11 der Wasserspiegel über ein vorgegebenes Niveau, so hebt der Schwimmer 13 nur das Gestänge 14 an und es wird wiederum die Verschlußvorrichtung 3 betätigt. In beiden Fällen wird der Zufluß unterbrochen, bis die Störung im Ablauf 8,12 behoben ist. Da der Wasserablauf 12 in das Abscheidebecken 20 des Leichtflüssigkeitsabscheiders mündet und gegebenenfalls ein Rückstau erfolgen kann, der zu einer derartigen Erhöhung des Wasserspiegels im Trennbehälter 1 führen könnte, daß Wasser durch die Leichtflüssigkeitsüberlauföffnung 5 in den Leichtflüssigkeitssammelbehälter gelangen könnte, ist der Wassersammelbehälter 11 durch einen Zwischenboden 15 unterteilt, in dem ein Durchlaß 16 vorgesehen ist. Der Schwimmer 13 ist in der unteren Kammer angeordnet, die auch den Wasserablauf 12 aufweist und das Gestänge 14 erstreckt sich durch den Durchlaß 16. Die Oberseite des Schwimmers 13 trägt eine zweite Verschlußvorrichtung 17 in Form eines den Durchlaß 16 verschließenden Absperrelementes, das sich bei Ansteigen des Wassers in der unteren Kammer an den Durchlaß 16 anpreßt und damit als gleichzeitig mit der Zuflußsperre wirkende Rückflußsperre fungiert.

## Patentansprüche

1. Abzugvorrichtung zum Einbau in ein Abscheidebecken (20) eines Leichtflüssigkeitsabscheiders, mit einem Trennbehälter (1), dessen oberer Bereich eine Zulauföffnung (2) für das zu reinigende Flüssigkeits-Gemisch, eine Überlauföffnung (5) für Leichtflüssigkeit in einen nachgeordneten Sammelbehälter (7) und eine Überlauföffnung (6) für Wasser aufweist, dadurch gekennzeichnet, daß an der Zulauföffnung (2) in den Trennbehälter (1) eine Verschlußvorrichtung (3) vorgesehen ist, daß der Überlauföffnung (6) für Wasser ein zweiter Sammelbehälter (11) nachgeordnet ist, und daß in jedem der beiden Sammelbehälter (7, 11) ein Schwimmer (9, 13) angeordnet ist, von dem die Verschlußvorrichtung (3) betätigbar ist.

2. Abzugvorrichtung nach Anspruch 1, dadurch gekennzeichnet, daß zwischen jedem Schwimmer (9,13) und der Verschlußvorrichtung (3) ein Betätigungsgestänge (10,14) vorgesehen ist.

3. Abzugvorrichtung nach Anspruch 2, dadurch gekennzeichnet, daß das Betätigungsgestänge (14) des Schwimmers (13) im Wassersammelbehälter (11) die Verschlußvorrichtung (3) betätigt, und das Betätigungsgestänge (10) des Schwimmers (9) im Leichtflüssigkeitssammelbehälter (7) am Betätigungsgestänge (14) des Schwimmers (13) im Wassersammelbehälter (11) angreift.

4. Abzugvorrichtung nach einem der Ansprüche 1 bis 3, dadurch gekennzeichnet, daß der Sammelbehälter (11) für Wasser einen Ablauf (12) in das Abscheidebecken (20) aufweist und dem Ablauf (12) des Wassersammelbehälters (11) als Wasserrückflußsperre eine zweite, durch den Schwimmer (13) im Wassersammelbehälter (11) betätigte Verschlußvorrichtung (17) zugeordnet ist.

5. Abzugvorrichtung nach einem der Ansprüche 1 bis 4, dadurch gekennzeichnet, daß der Wassersammelbehälter (11) durch einen einen Durchlaß (16) aufweisenden Zwischenboden (15) in zwei übereinander liegende Kammern unterteilt ist, in deren obere die Überlauföffnung (6) mündet, und deren untere den Schwimmer (13) sowie den Wasserablauf (12) aufweist, und daß an der Oberseite des Schwimmers (13) ein Absperrelement (17) für den Durchlaß (16) als Rückflußsperre in den Trennbehälter (1) vorgesehen ist.

## Claims

1. Drawing-off device for building into a separating tank (20) of a light liquid separator, with a separating container (1), the upper area of which is provided with an inlet aperture (2) for the liquid mixture to be cleansed, an overflow aperture (5) for liquid into a collecting container (7) following on, and an overflow aperture (6) for water, characterised in that a sealing device (3) is provided in the separating container (1) on the inlet aperture (2), in that a second collecting container (11) is arranged following on from the overflow aperture (6) for water, and in that in each of the two collecting containers (7, 11) there is arranged a float (9, 13) by means of which the sealing device (3) can be actuated.

2. Drawing-off device according to claim 1, characterised in that an actuating rod (10, 14) is arranged between each float (9, 13) and the sealing device (3).

3. Drawing-off device according to claim 2, characterised in that the actuating rod (14) of the float (13) in the water collecting container (11) actuates the sealing device (3), and the actuating rod (10) of the float (9) in the light liquid collecting container (7) engages with the actuating rod (14) of the float (13) in the water collecting container (11).

4. Drawing-off device according to one of claims 1 to 3, characterised in that the collecting container (11) for water is provided with a run-off (12) into the separating tank (20), and a second sealing device (17) actuated by the float (13) in the water collecting container is associated with the run-off (12) of the water collecting container (11) as a water return dam.

5. Drawing-off device according to one of claims 1 to 4, characterised in that the water collecting container (11) is divided into two chambers lying one on top of the other by means of an intermediate floor (15) provided with an outlet (16), into the upper chamber of which the overflow aperture (6) opens out, and the lower chamber of which is provided with the float (13) and the water run-off (12), and in that on the top side of the float (13) there is provided a barrier element (17) for the outlet (16) acting as a return dam in the separating tank (1).

## Revendications

1. Dispositif d'extraction à monter dans un bassin de séparation (20) d'un séparateur de liquide léger, comportant un récipient de séparation (1) dont la zone supérieure comprend une ouverture d'arrivée (2) pour le mélange de liquides à purifier, une ouverture de trop-plein (5) pour le liquide léger, qui débouche dans un récipient collecteur (7) monté en aval, et une ouverture de trop-plein (6) pour l'eau, caractérisé en ce qu'il est prévu un dispositif obturateur (3) au niveau de l'ouverture d'arrivée (2) qui débouche dans le récipient de séparation (1), en ce qu'un second récipient collecteur (11) est disposé en aval de l'ouverture de trop-plein (6) pour l'eau, et en ce qu'il est prévu, dans chacun des deux récipients collecteurs (7, 11), un flotteur (9, 13) grâce auquel le dispositif obturateur (3) peut être actionné.

2. Dispositif d'extraction selon la revendication 1, caractérisé en ce qu'il est prévu, entre chaque flotteur (9, 13) et le dispositif obturateur (3), une tringlerie d'actionnement (10, 14).

3. Dispositif d'extraction selon la revendication 2, caractérisé en ce que la tringlerie d'actionnement (14) du flotteur (13) prévu dans le récipient collecteur d'eau (11) actionne le dispositif obturateur (3), et la tringlerie d'actionnement (10) du flotteur (9) prévu dans le récipient collecteur de liquide léger (7) agit sur la tringlerie d'actionnement (14) dudit flotteur (13) prévu dans le récipient collecteur d'eau (11).

4. Dispositif d'extraction selon l'une des revendications 1 à 3, caractérisé en ce que le récipient collecteur (11) pour l'eau comporte un écoulement (12) vers le bassin de séparation (20) et il est prévu comme clapet anti-retour d'eau, associé à l'écoulement (12) du récipient collecteur d'eau (11), un second dispositif obturateur (17) qui est actionné par le flotteur (13) prévu dans le récipient collecteur d'eau (11).

5. Dispositif d'extraction selon l'une des revendications 1 à 4, caractérisé en ce que le récipient collecteur d'eau (11) est divisé par un fond intermédiaire (15) pourvu d'un passage (16) en deux chambres superposées, l'ouverture de trop-plein (6) débouchant dans la chambre supérieure tandis que la chambre inférieure comporte le flotteur (13) et l'écoulement d'eau (12), et en ce qu'il est prévu sur le côté supérieur du flotteur (13), comme clapet anti-retour vers le récipient de séparation (1), un élément d'arrêt (17) pour le passage (16).
